# EUROPÄISCHE PATENTANMELDUNG

(11) **EP 3 671 621 A1**
(43) Veröffentlichungstag der Anmeldung: **24.06.2020**
(21) Anmeldenummer: 19211720.8
(22) Anmeldetag: 27.11.2019
(51) Int. Cl.: G06Q 50/30

(54) **VERFAHREN ZUM BETRIEB EINER AUTONOMEN FAHRZEUGFLOTTE UND SERVICEMODUL FÜR EIN AUTONOMES FLOTTENFAHRZEUG**

(30) Priorität: 20.12.2018 DE 102018222640
(71) Anmelder: Volkswagen AG, 38440 Wolfsburg (DE)
(72) Erfinder: Kleinemas, Eva-Maria, 33415 Verl (DE); Petershagen, Frank, 30625 Hannover (DE); Röhl, Henrik, 38116 Braunschweig (DE); Schmitz, Phillip, 38102 Braunschweig (DE); Grobe, Sebastian, 38116 Braunschweig (DE); Weißbrich, Kira, 38108 Braunschweig (DE); Otremba, Dr. Maik, 38118 Braunschweig (DE)

(57) **Zusammenfassung**

Die Erfindung betrifft ein Verfahren zum Betrieb einer autonomen Fahrzeugflotte mit einer Vielzahl autonom fahrender Fahrzeuge (10) mit den Schritten: Ermitteln eines Servicebedarfs zumindest eines Fahrzeugs (10) der Fahrzeugflotte; Ermitteln einer am Fahrzeug (10) durchzuführenden Serviceaktion anhand des für das Fahrzeug ermittelten Servicebedarfs; Ermitteln einer zum Durchführen der Serviceaktion geeigneten Servicestation (90); Autonome Fahrt des Fahrzeugs (10) zu der ermittelten Servicestation (90); und Autonomes Durchführen der Serviceaktion am Fahrzeug (10) in der Servicestation (90). Die Erfindung betrifft ferner eine Servicestation (90) für die Fahrzeuge (10) einer autonomen Fahrzeugflotte, aufweisend: ein für die Kommunikation mit den Fahrzeugen (10) und/oder einem Server (70) eines Flottenbetreibers eingerichtetes zweites Kommunikationsmodul (91); eine zum Ermitteln einer an einem Fahrzeug (10) durchzuführenden Serviceaktion eingerichtete zweite Steuereinheit (92); und zumindest ein zum autonomen Durchführen einer Serviceaktion an dem Fahrzeug (10) ausgebildetes Servicemodul (95, 96, 97).

## Beschreibung

Die Erfindung betrifft ein Verfahren zum Betrieb einer autonomen Fahrzeugflotte, insbesondere einer Vielzahl selbstfahrender Elektrofahrzeuge eines Carsharing-Anbieters. Die Erfindung betrifft ferner ein Servicemodul für ein autonomes Flottenfahrzeug, insbesondere für ein autonomes Fahrzeug der autonomen Fahrzeugflotte. Das Servicemodul ist insbesondere dafür eingerichtet, die Betriebsfähigkeit des Fahrzeugs als Teil der Fahrzeugflotte zu erhalten.

Heutige Fahrzeuge verfügen bereits über eine Vielzahl von Assistenzsystemen, die den Fahrer in einer Vielzahl von Fahrsituationen computerbasiert unterstützen. Solche Assistenzsysteme können auf Sensoren zum Erfassen einer Vielzahl von Messdaten zurückgreifen, welche die Sinnesfähigkeiten des Menschen bei weitem übersteigen. Zudem übertrifft die Geschwindigkeit dieser Assistenzsysteme die menschliche Reaktionszeit signifikant. Bekannte Fahrerassistenzsysteme sind beispielsweise Spurhalteassistenten, Bremsassistenten bei Fußgängererkennung und Abstandsregeltempomaten, insbesondere für Stausituationen.

Durch Anwendung solcher Assistenzsysteme geht die Autonomie des Fahrers bezüglich seiner Fahrentscheidungen zunehmend auf das Fahrzeug beziehungsweise in diesem operierende Steuereinheiten über. Am Ende dieser Entwicklungen steht ein autonom fahrendes Fahrzeug, welches vollständig ohne Eingriffe eines Menschen manövrieren kann. Mittels eines solchen autonom fahrenden Fahrzeugs ist ein vollautomatisierter Personentransport möglich. Bislang sind solche autonom fahrenden Fahrzeuge in der Regel auf Einzelpersonen zugelassen und/oder besitzen ohne zusätzliche Überwachung durch einen Fahrer keine Straßenzulassung. Hinsichtlich von Wartung und Pflege unterscheiden sich diese autonom fahrenden Fahrzeuge somit wenig von anderen in Privatbesitz befindlichen Fahrzeugen. In der Regel werden sich der oder die Eigentümer um die Instandhaltung und Energieversorgung des Fahrzeugs kümmern.

Bereits heutzutage existieren jedoch verschiedenste Mobilitätskonzepte, insbesondere in urbanen Ballungsräumen. Beim sogenannten Carsharing greifen dabei eine Vielzahl von Nutzern unabhängig voneinander und zeitlich begrenzt auf die Fahrzeuge einer Fahrzeugflotte zu. Indem die Flottenfahrzeuge nur für den Zeitraum der tatsächlichen Nutzung an einen bestimmten Nutzer gebunden sind, kann die ungenutzte Parkzeit der Fahrzeuge minimiert werden. Derartige Konzepte sind auch für andere Fahrzeuge, wie beispielsweise Fahrräder, Roller oder Transporter, bekannt. Ohne auf Personenkraftwagen beschränkt zu sein, wird nachfolgend in stellvertretender Weise lediglich auf Carsharing Bezug genommen.

Man unterscheidet insbesondere zwischen zentralen und dezentralen Carsharing-Konzepten. Bei zentralen Carsharing-Konzepte muss die Fahrzeugnutzung stets an festen Stationen begonnen und beendet werden. Es handelt sich somit im Wesentlichen um eine kurzzeitige Form klassischer Fahrzeugvermietung. Bei dezentralen Carsharing-Konzepten kann die Fahrzeugnutzung hingegen an beliebigen Punkten in einem Geschäftsgebiet des Flottenanbieters begonnen und beendet werden. Insbesondere dezentrale Carsharing-Konzepte haben das Potential, die Anzahl der insgesamt benötigten Fahrzeuge deutlich zu minimieren, da ab einer ausreichenden Anzahl von Nutzern und Fahrzeugen die Flottenfahrzeuge in selbstorganisierter Weise und mit einer ausreichenden Dichte im Betriebsbereich des Carsharing-Flottenanbieters zur Verfügung stehen werden.

Insbesondere bei dezentralen Carsharing-Konzepten stellt jedoch die Energieversorgung, Wartung und Pflege der Fahrzeuge eine Herausforderung dar. Zum einen können zum Betanken und Reinigen der Flottenfahrzeuge Angestellte des Flottenanbieters genutzt werden. Dies erhöht jedoch die Personalkosten und somit die Kosten des Carsharing-Konzepts signifikant. Alternativ können die Nutzer der autonomen Fahrzeuge durch entsprechende Incentives dazu veranlasst werden, jeweils notwendige Servicefahrten durchzuführen. Hierbei besteht jedoch das Risiko einer unzureichenden Wartung oder von Ausfällen der Fahrzeuge.

Im Rahmen der vorliegenden Anmeldung wird unter Carsharing im Weiteren Sinne auch Ride-Pooling und Ride-Hailing verstanden. Eine autonome Fahrzeugflotte kann somit auch eine Flotte von Privatfahrzeugen sein, die nur zeitweise für Fahrdienstleistungen, insbesondere für autonome Fahrdienstleistungen, zur Verfügung gestellt werden. In diesen und gleichartigen Fällen ist unter einem Flottenbetreiber der Anbieter einer Anwendung zu verstehen, wobei die Anwendung zum Verbinden von Nutzern und Anbietern von Fahrdienstleistungen genutzt wird.

Der Erfindung liegt nun die Aufgabe zugrunde, die Probleme des Standes der Technik zu überwinden oder zumindest zu verringern und eine Lösung für die Wartung und Pflege von autonomen Flottenfahrzeugen zur Verfügung zu stellen. Die erfindungsgemäße Aufgabe wird gelöst durch ein Verfahren und ein Servicemodul gemäß den unabhängigen Patentansprüchen. Bevorzugte Weiterbildungen sind Gegenstand der jeweils rückbezogenen Unteransprüche.

Ein erster Aspekt der Erfindung betrifft ein Verfahren zum Betrieb einer autonomen Fahrzeugflotte, sprich zum Betrieb einer Flotte autonomer Fahrzeuge. Im Rahmen der vorliegenden Erfindung ist dabei jedes Fahrzeug der Flotte zu einem autonomen Fahrbetrieb ausgebildet (eingerichtet). Insbesondere weist jedes autonom fahrende Fahrzeug der Fahrzeugflotte zumindest einen zum Erfassen von Umgebungsdaten ausgebildeten ersten Sensor und zumindest einen zum Erfassen von Fahrzeugdaten ausgebildeten zweiten Sensor auf. Der zumindest eine erste Sensor erlaubt dabei ein Erfassen von Umgebungsbeziehungsweise Umweltinformationen und der zumindest eine zweite Sensor erlaubt ein Erfassen von fahrzeugeigenen Informationen. Jedes der Fahrzeuge weist ferner ein zum Durchführen autonomer Fahrmanöver ausgebildetes Fahrsystem auf. Das Fahrsystem ist bevorzugt zur vollständigen Quer- und Längsführung des Fahrzeugs ausgebildet. Ferner weist jedes der Fahrzeuge ein zum Herstellen zumindest einer Kommunikationsverbindung eingerichtetes (erstes) Kommunikationsmodul auf. Das (erste) Kommunikationsmodul ist beispielsweise ein WLAN- oder Mobilfunk-Modul und ist vorzugsweise zum Durchführen einer Car2Car oder Car2X Kommunikation ausgebildet. Ferner weist jedes der Fahrzeuge zumindest einen Energiespeicher, beispielsweise ein Batteriesystem und/oder einen Kraftstoff- oder Wasserstofftank, auf. Die individuellen Fahrzeuge der Fahrzeugflotte sowie deren vorgenannte Komponenten sind identisch zueinander oder verschiedenen voneinander.

In dem erfindungsgemäßen Verfahren zum Betrieb einer Flotte solcher autonomen Fahrzeuge wird zunächst ein Servicebedarf zumindest eines Fahrzeugs der Fahrzeugflotte ermittelt. Mit anderen Worten wird in einem ersten Schritt eine Information zu einer Zustandseigenschaft eines Flottenfahrzeugs ermittelt, die angibt, dass ein Ist-Zustand des Flottenfahrzeugs in einer bestimmten Eigenschaft von einem Soll-Zustand desselben abweicht. Dabei kann der Soll-Zustand für alle oder nur spezielle Fahrzeuge der Flotte gelten oder individuell festgelegt sein.

Die Art des Servicebedarfs ist in der Regel durch die Art beziehungsweise Klassifikation des Soll-Zustands vorbestimmt. Darüber hinaus kann die Art des Servicebedarfs jedoch auch durch fahrzeugspezifische Eigenschaften, beispielsweise das Vorliegen eines Elektro- und/oder Verbrennungsmotors, bestimmt sein, die dann in der Ermittlung berücksichtigt werden. Ferner bevorzugt wird im erfindungsgemäßen Verfahren ein Grad des Servicebedarfs ermittelt.

Im Rahmen der vorliegenden Anmeldung wird unter einem ermittelten Servicebedarf zumindest eines Fahrzeugs bevorzugt verstanden, dass eine Verschmutzung des Fahrzeugs ermittelt wurde. Die Verschmutzung kann dabei den Innenraum oder das Äußere des Fahrzeugs betreffen. Ebenfalls bevorzugt ist ein ermittelter Servicebedarf des Fahrzeugs ein ermittelter niedriger Füllstand des Energiespeichers des Fahrzeugs, also beispielsweise ein niedriger *State of Charge,* SOC, oder ein niedriger Füllstand eines Tanks für fossile Kraftstoffe oder Wasserstoff. Ebenfalls bevorzugt handelt es sich bei dem ermittelten Servicebedarf um eine ermittelte Fehlermeldung des Fahrzeugs, besonders bevorzugt um eine OBD2 Fehlermeldung. Ein Grad des Servicebedarfs betrifft in den vorgenannten bevorzugten Durchführungsformen beispielsweise einen Grad der Verschmutzung (Innen- oder Außenraum), das Vorliegen eines alternativen Energiespeichers (wie in einem Hybrid-Fahrzeug) oder die Art des gemeldeten Fehlers (wie beispielsweise bei Unterscheidung einer roten und einer gelben Warnleuchte).

Das Ermitteln des Servicebedarfs erfolgt im erfindungsgemäßen Verfahren bevorzugt vollautomatisch, beispielsweise mittels von dem zumindest einen zweiten Sensor erfassten fahrzeugspezifischen Daten. Beispielsweise kann ein Fahrzeugsteuergerät einen OBD2 Fehlercode ausgeben, sofern eine Eigendiagnose eine Funktionsstörung anzeigt. Ebenfalls bevorzugt erfolgt das Ermitteln des Servicebedarfs alternativ oder zusätzlich anhand einer Nutzereingabe. Beispielsweise kann ein Nutzer anzeigen, dass ein Fahrzeuginnenraum verschmutzt ist. Alternativ kann ein Fahrzeugnutzer das Vorliegen eines automatisch ermittelten Servicebedarfs durch eine entsprechende Nutzereingabe bestätigen, beispielsweise in Reaktion auf eine entsprechende Eingabeaufforderung. Besonders bevorzugt erfolgt die Nutzereingabe in dem Fahrzeug selbst oder mittels eines mit dem Fahrzeug verbundenen Peripheriegeräts, wie beispielsweise einem Smartphone eines Nutzers des autonomen Fahrzeugs.

In einem nächsten Schritt des erfindungsgemäßen Verfahrens wird anhand des für das Fahrzeug ermittelten Servicebedarfs eine am dem betreffenden Fahrzeug durchzuführende Serviceaktion ermittelt. Eine Serviceaktion beschreibt dabei in allgemeinster Form eine Einwirkung auf das Fahrzeug, um dieses von dem vorliegenden Ist-Zustand in einen gewünschten Soll-Zustand zu überführen. Besonders bevorzugt wird eine Art der Serviceaktion dabei anhand der Art des ermittelten Servicebedarfs ermittelt. Folglich wird im Rahmen der vorliegenden Anmeldung unter einer Serviceaktion eine zu einem bestimmten Servicebedarf korrespondierende Einwirkung auf das Fahrzeug verstanden. Zu einer Verschmutzung des Fahrzeugs korrespondiert dabei beispielsweise eine Reinigung des Fahrzeugs. Zu einem niedrigen Füllstand des Energiespeichers korrespondiert dabei bevorzugt ein Auffüllen des Energiespeichers. Zu einer detektierten Fehlermeldung des Fahrzeugs korrespondiert dabei bevorzugt eine Wartung oder eine Reparatur des Fahrzeugs. Ferner bevorzugt wird ein Grad der Serviceaktion anhand eines Grads des ermittelten Servicebedarfs ermittelt. Beispielsweise wird anhand eines Verschmutzungsgrads ermittelt, ob eine Außen- oder Innenreinigung, letztere gegebenenfalls mit oder ohne eine Polsterreinigung durchgeführt werden soll. Ebenfalls bevorzugt kann anhand des Grads einer Fehlermeldung eines zu niedrigen Luftdrucks eines Reifens ermittelt werden, ob ein Nachfüllen des Reifens oder dessen Austausch notwendig ist.

Im Rahmen des erfindungsgemäßen Verfahrens erfolgt das Ermitteln der zumindest einen Serviceaktion dabei bevorzugt von dem autonomen Fahrzeug selbst. Alternativ bevorzugt erfolgt das Ermitteln der Serviceaktion von einem Server eines Flottenbetreibers, an den zuvor von dem Fahrzeug Informationen zu dem Servicebedarf übermittelt wurden. Ebenfalls bevorzugt erfolgt das Ermitteln der Serviceaktion durch zumindest eine Servicestation, an die zuvor von dem Fahrzeug Informationen zu dem Servicebedarf übermittelt wurden.

Bevorzugt erfolgt das Ermitteln der zumindest einen Serviceaktion automatisch, beispielsweise datenbankbasiert, mittels zumindest eines Look-up-Tables, LUT, mittels zumindest eines Algorithmus und/oder mittels einer künstlichen Intelligenz. Alternativ oder zusätzlich bevorzugt erfolgt das Ermitteln der zumindest einen Serviceaktion vollständig oder teilweise anhand einer Nutzereingabe, beispielsweise in Reaktion auf eine Eingabeaufforderung. Der Nutzer ist dabei beispielsweise ein Fahrzeugnutzer oder ein Mitarbeiter des Flottenbetreibers.

In einem nächsten Schritt des erfindungsgemäßen Verfahrens wird eine zum Durchführen der ermittelten Serviceaktion geeignete Servicestation ermittelt. Im Rahmen der vorliegenden Anmeldung wird dabei unter einer geeigneten Servicestation eine zum Durchführen der ermittelten Serviceaktion eingerichtete (ausgebildete) Servicestation verstanden. Die geeignete Servicestation ist insbesondere dazu geeignet, die Serviceaktion voll- oder teilautonom durchzuführen. Unter autonomer Durchführung wird dabei die Durchführung ohne menschliches Zutun verstanden (abgesehen von Programmierung, Wartung und Instandhaltung der Servicestation). Die Eignung der Servicestation ergibt sich dabei insbesondere anhand der Ausstattung derselben, also anhand der in der Servicestation vorhandenen Servicemodule. Im Rahmen der vorliegenden Anmeldung ist ein Servicemodul dabei zum Durchführen zumindest einer erfindungsgemäßen Serviceaktion ausgebildet, wie beispielsweise zum Reinigen, zum Auffüllen eines Energiespeichers und/oder zum Durchführen einer Wartung oder Reparatur.

Die Durchführung des erfindungsgemäßen Verfahrens erfolgt bevorzugt im Rahmen einer Service-Infrastruktur, die eine Vielzahl von Servicestationen aufweist, welche in einem Betriebsgebiet der autonomen Fahrzeugflotte verteilt sind. Die Anzahl und Dichte der Servicestationen ist dabei bevorzugt an die Anzahl der autonomen Flottenfahrzeuge sowie an den Bedarf von Serviceaktionen beziehungsweise die Frequenz benötigter Serviceaktionen angepasst. Jede der Servicestationen ist vorzugsweise zur Kommunikation mit den autonomen Fahrzeugen, mit einem Server des Flottenbetreibers und/oder mit anderen Servicestationen ausgebildet. Die Ausgestaltung der Servicestationen ist im Folgenden noch im Detail erläutert.

Im Rahmen des erfindungsgemäßen Verfahrens erfolgt das Ermitteln der geeigneten Servicestation dabei bevorzugt von einem Server eines Flottenbetreibers, der über Informationen über die Ausstattung der Servicestationen verfügt, dem Informationen über die Auslastung der Servicestationen übermittelt wurden und/oder an den Informationen über den Servicebedarf zumindest eines Fahrzeugs übermittelt wurden. Ebenfalls bevorzugt erfolgt das Ermitteln der Eignung durch zumindest eine Servicestation selbst, an die von einem Fahrzeug oder dem Server Informationen zu einer benötigten Serviceaktion oder einem Servicebedarf eines Fahrzeugs übermittelt wurden. Besonders bevorzugt berücksichtigt die Servicestation dabei ihre eigene Auslastung. In jeder der vorgenannten Durchführungsformen erfolgt das Ermitteln der Eignung dabei bevorzugt automatisch, beispielsweise datenbankbasiert, mittels zumindest eines Look-up-Tables, LUT, mittels zumindest eines Algorithmus und/oder mittels einer künstlichen Intelligenz. Alternativ oder zusätzlich bevorzugt erfolgt das Ermitteln der zumindest einen geeigneten Servicestation teilweise durch eine Nutzereingabe, beispielsweise eines Mitarbeiters des Flottenbetreibers in Reaktion auf eine Eingabeaufforderung.

In einem nächsten Schritt des erfindungsgemäßen Verfahrens erfolgt eine autonome Fahrt des Fahrzeugs zu der ermittelten geeigneten Servicestation. Die Fahrt erfolgt dabei unmittelbar nach dem eine geeignete Servicestation ermittelt wurde oder zu einem bestimmten Zeitpunkt. Bei dem bestimmten Zeitpunkt handelt es sich bevorzugt um einen Zeitpunkt, der gewöhnlich eine geringe Auslastung aufweist, wie beispielsweise eine frühe Morgenstunde oder dergleichen. Das Durchführen der autonomen Fahrt hängt ebenfalls bevorzugt von einer tatsächlichen Auslastung des Fahrzeugs ab. Ebenfalls bevorzugt hängt das Durchführen der autonomen Fahrt von einer geschätzten Dauer der ermittelten Serviceaktion und/oder der Auslastung der Servicestation ab. Ebenfalls bevorzugt kann eine Nutzereingabe bei der Entscheidung für die autonome Fahrt berücksichtigt werden. Besonders bevorzugt erfolgt die Fahrt zu der Servicestation zu einem Zeitpunkt, zu dem eine Beeinträchtigung des Flottenbetriebs durch den Ausfall des betreffenden Fahrzeugs minimal ist. Je nach Art und/oder Grad des ermittelten Servicebedarfs beziehungsweise der ermittelten Serviceaktion kann die Fahrt jedoch auch durch einen Fahrzeugtransporter vermittelt werden, der das betreffende autonome Fahrzeug aufnimmt und zu der geeigneten Servicestation transportiert.

Sofern das betreffende autonome Fahrzeug in der ermittelten und geeigneten Servicestation eintrifft, wird die ermittelte und dem Servicebedarf entsprechende Serviceaktion in und von der Servicestation an dem Fahrzeug teil- oder vollautonom durchgeführt. Mit anderen Worten weist die Servicestation zumindest eine Vorrichtung auf, die zur Durchführung der Serviceaktion ausgebildet ist. Die Vorrichtung ist dabei bevorzugt als Robotik ausgebildet, die keine oder nur minimale Einwirkung eines Nutzers erfordert. Besonders bevorzugt erfolgt die Serviceaktion in der Servicestation vollautomatisch. Sofern im erfindungsgemäßen Verfahren zuvor lediglich die Art des Servicebedarfs und der Serviceaktion ermittelt worden sind, erfolgt in der Servicestation ferner ein Ermitteln des Grads des Servicebedarfs und der Serviceaktion. Beispielsweise kann erst bei der Einfahrt in eine zur Reinigung ausgebildete Servicestation der Grad der Verschmutzung des autonomen Fahrzeugs und entsprechend eine Intensität der Reinigung ermittelt werden. Ebenfalls bevorzugt umfasst das autonome Durchführen der Serviceaktion ferner das Überprüfen der Qualität der autonom durchgeführten Serviceaktion. Beispielsweise kann in der Servicestation erneut überprüft werden, ob ein Ist-Zustand des Fahrzeugs nach dem Durchführen der Service-Aktion dem angestrebten Soll-Zustand entspricht. Sofern die autonome Durchführung der Serviceaktion abgeschlossen ist, zumindest sofern die Überprüfung des Serviceergebnisses erfolgreich absolviert ist, kann das autonome Fahrzeug in den Betrieb in der autonomen Fahrzeugflotte zurückkehren. Ist die Überprüfung nicht erfolgreich, wird gegebenenfalls die gleiche oder eine andere Serviceaktion durchgeführt.

Das erfindungsgemäße Verfahren ermöglicht vorteilhaft einen langfristigen Betrieb einer autonomen Fahrzeugflotte durch Erhalt der Betriebsfähigkeit der Flottenfahrzeuge. Die Betriebsfähigkeit kann dabei sowohl die tatsächliche Einsatzfähigkeit, beispielsweise in Abhängigkeit eines Füllgrads des Energiespeichers, als auch die kommerzielle Einsatzfähigkeit, beispielsweise in Abhängigkeit eines Verschmutzungsgrad des Fahrzeugs, betreffen. Das erfindungsgemäße Verfahren integriert die Benutzung autonomer Betriebshöfe in die Nutzung einer autonomen Fahrzeugflotte, insbesondere zur Reinigung, Betankung und Wartung der Fahrzeuge. Indem das Erkennen eines Servicebedarfs, die Auswahl einer Servicestation und die Fahrt zu der Servicestation autonom erfolgen, wird der Personalaufwand gering gehalten.

In einer bevorzugten Durchführungsform umfasst das erfindungsgemäße Verfahren ferner einen oder mehrere der folgenden Verfahrensschritte. Bevorzugt erfolgt das Ermitteln des Servicebedarfs anhand einer Nutzereingabe und/oder anhand von Fahrzeugdaten des Fahrzeugs. Beispielsweise wird mittels eines fahrzeugeigenen Sensors ein niedriger Füllstand eines Energiespeichers detektiert. Ebenfalls bevorzugt wird mittels einer Nutzereingabe, beispielsweise über eine Smartphone-App oder eine Eingabe über ein Kombiinstrument des Fahrzeugs, ein Verschmutzungsgrad des Fahrzeugs bestimmt. Ferner bevorzugt wird der Servicebedarf des Fahrzeugs an einen Server eines Flottenbetreibers und/oder an zumindest eine Servicestation übermittelt. Die Übermittlung erfolgt bevorzugt mittels Telekommunikation von dem Fahrzeug oder, insbesondere im vorgenannten Beispiel, direkt von einem Smartphone eines Nutzers. Die Übertragung erfolgt bevorzugt mittels einer Nachricht, welche Informationen zu dem ermittelten Servicebedarf enthält. Die Nachricht weist dabei ein geeignetes Format auf.

Ebenfalls bevorzugt erfolgt im erfindungsgemäßen Verfahren das Ermitteln der zum Servicebedarf korrespondierenden Serviceaktion durch den Server oder durch die zumindest eine Servicestation. Besonders bevorzugt erfolgt das Ermitteln basierend auf zuvor von dem Fahrzeug oder von dem Nutzer (Smartphone) empfangenen Informationen. Der Server und/oder die Servicestation weisen hierfür bevorzugt entsprechend eingerichtete Steuereinheiten auf. Ferner weisen die Servicestation und/oder der Server jeweils ein Kommunikationsmodul zum Empfangen der entsprechenden Informationen auf. Ebenfalls bevorzugt werden im erfindungsgemäßen Verfahren Informationen zu der zumindest einen ermittelten Servicestation von dem Server oder von einer Servicestation an das Fahrzeug übermittelt. Die Informationen enthalten insbesondere Angaben zur Position, Ausstattung und/oder Auslastung der Servicestation. Besonders bevorzugt führt das Fahrzeug die autonome Fahrt zu der geeigneten Servicestation basierend auf diesen übermittelten Informationen durch.

Ebenfalls bevorzugt erfolgt in einer Durchführungsform des erfindungsgemäßen Verfahrens das Ermitteln einer geeigneten Servicestation in Abhängigkeit von der Auslastung der Servicestation. Dabei weist von mehreren identisch ausgestatteten Servicestationen eine Servicestation mit geringerer Auslastung eine höhere Eignung auf, als eine Servicestation mit höherer Auslastung. Die Informationen zur Auslastung der Servicestation liegen bevorzugt in der Servicestation selbst vor oder werden von dieser an einen Server des Flottenbetreibers übermittelt. Ebenfalls bevorzugt erfolgt in einer Durchführungsform des erfindungsgemäßen Verfahrens das Ermitteln einer geeigneten Servicestation in Abhängigkeit des Abstands zwischen dem betreffenden Fahrzeug und der zumindest einen Servicestation. In der Regel ist dabei eine Servicestation umso geeigneter, je näher diese an dem betreffenden Fahrzeug ist. In Abhängigkeit der Auslastung der einzelnen Servicestationen kann jedoch auch eine weiter von dem Fahrzeug entfernte Servicestation für das Durchführen des Service am geeignetsten sein.

Die Verfahrensschritte des erfindungsgemäßen Verfahrens können durch elektrische oder elektronische Bauteile oder Komponenten (Hardware), durch Firmware (ASIC) implementiert sein oder durch beim Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert.

Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet mit anderen Komponenten, beispielsweise einem Kommunikationsmodul sowie ein oder mehreren Sensoren beziehungsweise Kameras, zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne von dem zuvor beschriebenen erfindungsgemäßen Verfahren abzuweichen.

Ein weiterer Aspekt der vorliegenden Erfindung betrifft eine Servicestation für die Fahrzeuge einer autonomen Fahrzeugflotte, insbesondere für Flottenfahrzeuge wie einleitend beschrieben. Die Servicestation ist bevorzugt dafür ausgebildet, in einem erfindungsgemäßen Verfahren, wie obenstehend beschrieben, zum Einsatz zu kommen. Hierzu weist eine erfindungsgemäße Servicestation bevorzugt ein für die Kommunikation mit den Fahrzeugen und/oder einem Server eines Flottenbetreibers eingerichtetes (zweites) Kommunikationsmodul auf. Das (zweite) Kommunikationsmodul ist beispielsweise ein WLAN- oder Mobilfunk-Modul und ist vorzugsweise zum Durchführen einer Car2Car oder Car2X Kommunikation ausgebildet. Das zweite Kommunikationsmodul ist besonders bevorzugt dafür ausgebildet entsprechend eines von dem ersten Kommunikationsmodul und/oder von dem Server genutzten Kommunikationsprotokolls zu kommunizieren.

Die erfindungsgemäße Servicestation weist ferner eine zum Ermitteln einer an einem Fahrzeug durchzuführenden Serviceaktion eingerichtete zweite Steuereinheit auf. Die Steuereinheit ist insbesondere dazu ausgebildet, die Serviceaktion anhand von Informationen zu einem Servicebedarf des Fahrzeugs zu ermitteln. Das zweite Kommunikationsmodul ist bevorzugt dazu ausgebildet, Informationen zu diesem Servicebedarf von einem Fahrzeug und/oder dem Server zu empfangen. Ferner weist die erfindungsgemäße Servicestation zumindest ein zum autonomen Durchführen einer Serviceaktion an dem Fahrzeug ausgebildetes Servicemodul auf. Das Servicemodul ist besonders bevorzugt als Roboter ausgebildet oder weist Robotik auf. Die spezifische Ausgestaltung der Servicemodule der Servicestation kann variieren.

In einer bevorzugten Ausführungsform ist die erfindungsgemäße Servicestation dafür ausgebildet, die durchzuführende Serviceaktion anhand empfangener oder erfasster Informationen zu einem Servicebedarf des Fahrzeugs zu ermitteln. Besonders bevorzugt ist die zweite Steuereinheit dafür eingerichtet ist, zumindest eine am Fahrzeug durchzuführende Serviceaktion anhand von Informationen zu ermitteln, die mittels des zweiten Kommunikationsmoduls von dem Fahrzeug oder von dem Server empfangen wurden.

Ebenfalls bevorzugt ist die zweite Steuereinheit dazu ausgebildet, anhand von fahrzeugspezifischen Größen, die von einem ersten Kontrollmodul erfasst wurden, einen Servicebedarf und/oder eine Serviceaktion für das Fahrzeug zu ermitteln. Ebenfalls bevorzugt werden von dem Fahrzeug und/oder von dem Server empfangene Daten mit in der Servicestation erfassten Daten kombiniert, um die Art und/oder den Grad der an dem Fahrzeug durchzuführenden Serviceaktion zu bestimmen. Ist die Servicestation bereits vorab als geeignete Station für eine Fahrzeugreinigung ermittelt worden, wird bevorzugt bei Ankunft des Fahrzeugs der Verschmutzungsgrads des Fahrzeugs erfasst, um Art und Grad der Reinigung, beispielsweise Innen- oder Außenreinigung, Polsterreinigung, Desinfektion, etc. zu ermitteln.

In einer bevorzugten Ausführungsform weist die erfindungsgemäße Servicestation zumindest ein zum Durchführen einer Innenraumreinigung des Fahrzeugs ausgebildetes erstes Servicemodul auf. Bei dem ersten Servicemodul handelt es sich bevorzugt um einen Roboterarm, der zur Innenraumreinigung des Fahrzeugs geeignete Werkzeuge trägt. Der Roboterarm ist bevorzugt dazu ausgebildet durch eine geöffnete Tür oder ein geöffnetes Fenster des Fahrzeugs in den Fahrzeuginnenraum eingeführt zu werden. Bei den Werkzeugen handelt es sich beispielsweise um eine Staubsaugerdüse, eine Polsterbürste, einen Applikator zum Auftrag von Reinigungsmittel und/oder Mittel zur Ablagen- und/oder Scheibenreinigung.

In einer alternativ bevorzugten Ausführungsform weist das erste Servicemodul einen mobilen Reinigungsroboter auf, der dazu ausgebildet ist, durch eine geöffnete Tür oder ein geöffnetes Fenster des Fahrzeugs in einen Fahrzeuginnenraum einzudringen. Der mobile Reinigungsroboter weist ferner bevorzugt zur Innenraumreinigung geeignete Werkzeuge, wie beispielsweise eine Staubsaugerdüse, eine Polsterbürste, einen Applikator zum Auftrag von Reinigungsmittel und/oder Mittel zur Ablagen- und/oder Scheibenreinigung auf. Der mobile Reinigungsroboter ist ferner dazu ausgebildet eine Innenraumreinigung autonom und/oder bei geschlossenen Türen und Fenstern durchführen.

Ebenfalls bevorzugt weist die erfindungsgemäße Servicestation alternativ oder zusätzlich zumindest ein zum Durchführen einer Außenreinigung des Fahrzeugs ausgebildetes zweites Servicemodul auf. Das zweite Servicemodul ist bevorzugt wie eine aus dem Stand der Technik bekannte automatische Waschstraße ausgebildet und weist bevorzugt Düsen zum Auftrag von zumindest einer Reinigungsflüssigkeit, Bürsten oder Lappen zum Abtrag von Schmutz von dem Fahrzeug und/oder einen Fön zum Trocknen des Fahrzeugs auf. Besonders bevorzugt weist das zweite Servicemodul darüber hinaus weitere Waschelemente, wie beispielsweise speziell zur Felgenwäsche ausgebildete Bürsten und/oder Mittel zum Wachsauftrag, auf. Ebenfalls bevorzugt weist das zweite Servicemodul Mittel zum Transport des Fahrzeugs im Modul auf.

Ebenfalls bevorzugt weist die erfindungsgemäße Servicestation alternativ oder zusätzlich zumindest ein zum Befüllen des Energiespeichers des Fahrzeugs ausgebildetes drittes Servicemodul auf. Das dritte Servicemodul weist dabei insbesondere einen eigenen Energiespeicher, beispielsweise eine Batterie oder einen Kraftstofftank, oder einen Anschluss an ein entsprechendes Versorgungsnetz, beispielsweise an ein Stromnetz oder an eine Kraftstoffzuleitung, auf. Ferner weist das dritte Servicemodul ein Anschlussmodul zum Anschluss an ein Nachfüllelement des Fahrzeugs auf. Das Nachfüllelement des Fahrzeugs ist dabei beispielsweise ein Tankstutzen oder eine Ladebuchse. Ferner weist das Anschlussmodul bevorzugt einen Roboterarm auf, der ein an das Nachfüllelement des Fahrzeugs angepasstes Befüllelement aufweist. Das Befüllelement ist vorteilhaft über eine Zuleitung mit dem Energiespeicher verbunden. Besonders bevorzugt ist das dritte Servicemodul für Hybridfahrzeuge ausgebildet und weist beispielsweise ein mit dem Stromnetz verbundenes erstes Befüllelement zum Anschluss an eine Ladebuchse des Fahrzeugs und ein mit einer Kraftstoffzuleitung verbundenes zweites Befüllelement zum Anschluss an einen Tankstutzen des Fahrzeugs auf. Eine erfindungsgemäße Servicestation kann über das erste, zweite und dritte Servicemodul hinaus ein oder mehrerer weitere Servicemodule aufweisen.

In einer weiteren bevorzugten Ausführungsform der erfindungsgemäßen Servicestation sind das erste, zweite und dritte Servicemodul in einem gemeinsamen Bereich der Servicestation angeordnet. Besonders bevorzugt sind alle Servicemodule in der Servicestation derart angeordnet, dass sie ihre Funktionen an einem in der Servicestation befindlichen Fahrzeug durchführen können, ohne dass eine Bewegung des Fahrzeugs in der Station notwendig ist. In einer solchen Servicestation werden eine Innenraumreinigung, eine Außenreinigung und ein Befüllen des Energiespeichers eines Fahrzeugs sequentiell oder parallel an einem in der Servicestation befindlichen Fahrzeug durchgeführt, ohne dass eine Bewegung des Fahrzeugs erfolgt. Gemäß dieser Ausführungsform ist die zweite Steuereinheit bevorzugt dafür eingerichtet, die autonome Einfahrt des Fahrzeugs in die Servicestation zu initiieren, beispielsweise indem sie mittels der Kommunikationsmodule mit der Steuereinheit/dem Fahrsystem des Fahrzeugs kommuniziert. Alternativ bevorzugt endete die autonome Fahrt des Fahrzeugs zur Servicestation auf einem Transportband derselben und beinhaltet die autonome Einfahrt des Fahrzeugs in die Station einen Transport des Fahrzeugs mittels des Laufbands.

Gemäß dieser Ausführungsform ist die zweite Steuereinheit ferner bevorzugt dafür eingerichtet, mittels des ersten Servicemoduls eine Innenraumreinigung des Fahrzeugs zu initiieren, wenn zumindest einer Fahrzeugtür des Fahrzeugs geöffnet ist. Dabei wird die Innenraumreinigung bevorzugt durch Einführen des mobilen Reinigungsroboters initiiert, wonach sich die Fahrzeugtür wieder schließt. Alternativ wird die Fahrzeugreinigung mittels eines Roboterarms durch die offene Fahrzeugtür hindurch durchgeführt. Ebenfalls bevorzugt ist die zweite Steuereinheit dafür eingerichtet, mittels des zweiten Servicemoduls eine Außenreinigung des Fahrzeugs durchzuführen, wenn zumindest einer Fahrzeugtür des Fahrzeugs geschlossen ist. Die Außenreinigung des Fahrzeugs kann somit erfolgen, während der mobile Reinigungsroboter das Fahrzeuginnere reinigt. Alternativ kann die Außenreinigung vor oder nach der Innenreinigung erfolgen. Ebenfalls bevorzugt ist die zweite Steuereinheit dafür eingerichtet mittels des dritten Servicemoduls den Energiespeicher des Fahrzeugs zu befüllen. Das Befüllen des Energiespeichers erfolgt zeitgleich oder zeitlich versetzt zur Innenraum- und/oder zur Außenraumreinigung. Umfasst das Befüllen ein Nachladen eines elektrischen Energiespeichers ist die Gefahr von Kurzschlüssen durch ein etwaig eingesetztes Reinigungsfluid zu beachten. Diese kann durch geeignete Positionierung des Nachfüllelements am Fahrzeug, beispielsweise am Unterboden, oder durch zeitlich versetzte Reinigung erfolgen.

In einer ebenfalls bevorzugten Ausführungsform der erfindungsgemäßen Servicestation sind das erste Servicemodul, das zweite Servicemodul und/oder das dritte Servicemodul in verschiedenen Bereichen der Servicestation angeordnet. Gemäß dieser Ausführungsform ist somit zumindest eine Bewegung des Fahrzeugs zwischen der Durchführung der einzelnen Serviceaktionen notwendig. Gemäß einer besonders bevorzugten Ausführungsform sind alle Servicemodule separat voneinander in der Servicestation angeordnet, die Servicestation ist mithin vollständig modular aufgebaut. In jedem der Servicemodule erfolgt die entsprechende Serviceaktion und anschließend erfolgt eine Bewegung des Fahrzeugs zum nächsten Modul. Die Bewegung des Fahrzeugs kann dabei autonom oder durch die Servicestation erfolgen.

In einer ebenfalls besonders bevorzugten Ausführungsform ist das zweite Servicemodul separat angeordnet und sind das erste Servicemodul und das dritte Servicemodul in einem gemeinsamen Bereich des Servicemoduls angeordnet. Somit erfolgen vor oder nach der Außenreinigung des Fahrzeugs gleichzeitig das Befüllen des Energiespeichers und eine Innenraumreinigung des Fahrzeugs. Auch hier ist eine Bewegung des Fahrzeugs zwischen Modulen, insbesondere zwischen der Außenreinigung und dem kombinierten Laden und Innenreinigen, notwendig. Diese Bewegung erfolgt autonom oder durch die Servicestation.

Gemäß dieser besonders bevorzugten Ausführungsform ist die zweite Steuereinheit bevorzugt dafür eingerichtet, die autonome Einfahrt des Fahrzeugs in einen ersten Bereich der Servicestation zu initiieren. Beispielsweise kommuniziert die zweite Steuereinheit über die Kommunikationsmodule mit der Steuereinheit/dem Fahrsystem des Fahrzeugs. Alternativ endete die autonome Fahrt des Fahrzeugs zur Servicestation auf einem Transportband der Servicestation und beinhaltet die autonome Einfahrt des Fahrzeugs einen Transport des Fahrzeugs mittels des Transportbands in die Servicestation. Ferner bevorzugt ist die zweite Steuereinheit dafür eingerichtet, eine autonome Fahrt des Fahrzeugs von dem ersten Bereich zu einem zweiten Bereich der Servicestation zu kontrollieren und/oder zu initiieren. Die Initiierung erfolgt dabei bevorzugt über eine Kommunikation mit dem Fahrsystem des Fahrzeugs, um eine autonome Fahrt des Fahrzeugs zu beginnen. Alternativ erfolgt das Initiieren des Transports durch Betrieb eines Transportbands der Servicestation ohne eine Eigenbewegung des Fahrzeugs. Der erste Bereich weist bevorzugt zumindest eines von dem ersten, zweiten und dritten Servicemodul auf und der zweite Bereich weist bevorzugt zumindest ein anderes von dem ersten, zweiten und dritten Servicemodul auf. Die Servicemodule im ersten Bereich sind somit verschieden von den im zweiten Bereich angeordneten Modulen.

In einer ebenfalls bevorzugten Ausführungsform der erfindungsgemäßen Servicestation weist diese zusätzlich ein den Servicemodulen vorgelagertes erstes Kontrollmodul auf. Das erste Kontrollmodul weist dabei zumindest einen dritten Sensor auf, der zum Erfassen zumindest einer einen Servicebedarf des Fahrzeugs charakterisierenden Größe ausgebildet ist. Mit anderen Worten ist das erste Kontrollmodul dazu ausgebildet (eingerichtet) zumindest einen Servicebedarf des Fahrzeugs zu detektieren. Somit kann vorteilhaft ein zuvor erfasster Servicebedarf beziehungsweise eine daraus ermittelte Serviceaktion verifiziert und modifiziert werden. Ebenfalls bevorzugt wurde im erfindungsgemäßen Verfahren vorab lediglich ein Art des Servicebedarfs beziehungsweise eine Art der dazu korrespondierenden Serviceaktion bestimmt. In diesem Fall wird anhand von mittels dem ersten Kontrollmodul erfassten Informationen, ein Grad des Servicebedarfs oder der zugehörigen Serviceaktion bestimmt.

In einer besonders bevorzugten Ausführungsform ist das erste Kontrollmodul als eine Scanbrücke oder dergleichen ausgebildet. Ebenfalls bevorzugt weist das erste Kontrollmodul zumindest einen Sensor, beispielsweise einen optischen Sensor wie eine Kamera, zum Erfassen einer Verschmutzung des Fahrzeugs auf. Ebenfalls bevorzugt weist das erste Kontrollmodul Mittel zum Auslesen eines Füllstands eines Energiespeichers des Kraftfahrzeugs und/oder Mittel zum Auslesen einer Fehlermeldung des Kraftfahrzeugs auf. Ferner bevorzugt ist das erste Kontrollmodul zusätzlich zum Erfassen einer Vielzahl von fahrzeugspezifischen Informationen (unabhängig von einem Servicebedarf) ausgebildet. Das erste Kontrollmodul ist besonders bevorzugt dazu ausgebildet, einen Fahrzeugtyp, eine Fahrzeuggröße, das Vorhandensein von Gegenständen (Ladung, Kindersitz, Dokumente, etc.) im Fahrzeug, Einstellwerte von verstellbaren Fahrzeugkomponenten (Sitze, Spiegel, etc.) und dergleichen zu erfassen. Die zweite Steuereinheit ist bevorzugt dazu ausgebildet, die Serviceaktion anhand der zusätzlich erfassten fahrzeugspezifischen Informationen anzupassen. Beispielsweise kann eine Reinigung des Fahrzeugs in Abhängigkeit der Fahrzeuggröße angepasst werden oder so durchgeführt werden, dass im Fahrzeug befindliche Gegenstände eines Nutzers nicht entfernt werden. Ebenfalls bevorzugt werden nach Abschluss der Serviceaktion die erfassten Ausgangspositionen von Fahrzeugkomponenten, wie Sitzpositionen, wiederhergestellt.

In einer ebenfalls bevorzugten Ausführungsform der erfindungsgemäßen Servicestation weist diese ferner ein den Servicemodulen nachgelagertes zweites Kontrollmodul auf. Das zweite Kontrollmodul weist dabei zumindest einen vierten Sensor auf, der zum Erfassen zumindest einer den Servicebedarf des Fahrzeugs charakterisierenden Größe ausgebildet ist. Mit anderen Worten ist das zweite Kontrollmodul ebenfalls dazu ausgebildet, zumindest einen Servicebedarf des Fahrzeugs zu detektieren. Diese Detektion dient jedoch insbesondere dazu, die Qualität der zuvor durchgeführten Serviceaktion zu evaluieren. Insbesondere kann der mit dem zweiten Kontrollmodul erfasste Ist-Zustand mit einem mit der Serviceaktion angestrebten Soll-Zustand verglichen werden. Bevorzugt ist das zweite Kontrollmodul ganz oder teilweise identisch zu dem ersten Kontrollmodul ausgebildet, beispielsweise als Scanbrücke oder dergleichen.

Ein weiterer Aspekt der Erfindung betrifft ein Computerprogramm, umfassend Befehle, die bei der Ausführung des Programms durch einen Computer, wie beispielsweise eine Steuereinheit einer Servicestation, diesen veranlassen, das erfindungsgemäße Verfahren auszuführen, das erfindungsgemäße Verfahren der Servicestation umfassend die Schritte: Ermitteln zumindest einer am Fahrzeug durchzuführende Serviceaktion anhand von einem Fahrzeug und/oder von einem Server empfangener Informationen oder Übermittlung von Informationen zur eigenen Lage, Ausstattung und/oder Auslastung an ein Fahrzeug und/oder an einen Server; Initiieren einer autonomen Einfahrt eines Fahrzeugs in die Servicestation; und Kontrolle der autonomen Durchführung zumindest einer Serviceaktion an dem Fahrzeug mittels zumindest eines Servicemoduls. Bevorzugt umfasst das Verfahren der Servicestation ferner die Schritte: Erkennen eines die Servicestation zum Durchführen einer Serviceaktion ansteuernden Fahrzeugs und/oder Erfassen einer fahrzeugspezifischen Größe und/oder eines Servicebedarfs des Fahrzeugs mittels eines ersten Kontrollmoduls und/oder eines zweiten Kontrollmoduls.

Ein weiterer Aspekt der Erfindung betrifft ein computerlesbares Speichermedium, umfassend Befehle, die bei der Ausführung durch einen Computer, wie beispielsweise eine Steuereinheit einer Servicestation, diesen veranlassen, das erfindungsgemäße Verfahren auszuführen, das erfindungsgemäße Verfahren der Servicestation umfassend die Schritte: Ermitteln zumindest einer am Fahrzeug durchzuführende Serviceaktion anhand von einem Fahrzeug und/oder von einem Server empfangener Informationen oder Übermittlung von Informationen zur eigenen Lage, Ausstattung und/oder Auslastung an ein Fahrzeug und/oder an einen Server; Initiieren einer autonomen Einfahrt eines Fahrzeugs in die Servicestation; und Kontrolle der autonomen Durchführung zumindest einer Serviceaktion an dem Fahrzeug mittels zumindest eines Servicemoduls. Bevorzugt umfasst das Verfahren der Servicestation ferner die Schritte: Erkennen eines die Servicestation zum Durchführen einer Serviceaktion ansteuernden Fahrzeugs und/oder Erfassen einer fahrzeugspezifischen Größe und/oder eines Servicebedarfs des Fahrzeugs mittels eines ersten Kontrollmoduls und/oder eines zweiten Kontrollmoduls.

Ein weiterer Aspekt der Erfindung betrifft ein autonomes Fahrzeug, insbesondere einen Personenkraftwagen mit Verbrennungs-, Elektro- oder Hybridmotor, welches zumindest einen zum Erfassen von Umgebungsdaten eingerichteten ersten Sensor, zumindest einen zum Erfassen von Fahrzeugdaten eingerichteten zweiten Sensor und ein erstes Kommunikationsmodul, sowie ein zum autonomen Fahren des Kraftfahrzeugs eingerichtetes Fahrsystem aufweist. Das Kommunikationsmodul weist bevorzugt einen Funk-, Mobilfunk-, WLAN-, und/oder Bluetooth-Transceiver oder alternative Drahtloskommunikationsgeräte auf. Der zumindest eine erste Sensor ist dabei dazu ausgebildet, die Umgebung des Fahrzeugs betreffende Sensorsignale zu erfassen. Der zumindest eine zweite Sensor ist dabei dazu ausgebildet, das Fahrzeug selbst betreffende Sensorsignale zu erfassen. Das erste Kommunikationsmodul ist dabei dazu ausgebildet, das Fahrzeug und/oder dessen Umgebung potentiell betreffende Informationen über ein Kommunikationsnetzwerk zu empfangen. Dabei versetzt ein mittels des zumindest einen ersten Sensors empfangenes Umgebungssignal das Fahrzeug bevorzugt in die Lage sich über seine Umwelt zu informieren und bildet bevorzugt eine Vielzahl von Umweltinformationen ab. Ein mittels des zumindest einen zweiten Sensors empfangenes Zustandssignal versetzt das Fahrzeug bevorzugt in die Lage sich über seinen Eigenzustand zu informieren und bildet dazu eine Vielzahl von Zustandsinformationen ab.

Das Fahrsystem des erfindungsgemäßen Kraftfahrzeugs ist bevorzugt dafür eingerichtet, zumindest ein autonomes Fahrmanöver und/oder eine autonome Fahrt von der Eigenposition des Fahrzeugs zu einer Zielposition des Fahrzeugs durchzuführen. Besonders bevorzugt ist das Fahrsystem zur vollständig automatischen (autonomen) Führung des Kraftfahrzeugs ausgebildet und kann die Längsführung sowie die Querführung des Kraftfahrzeugs steuern. Ferner bevorzugt kann das Fahrsystem auf den zumindest einen ersten Sensor und/oder auf den zumindest einen zweiten Sensor zum Bestimmen von Zustandsinformationen und/oder von Umgebungsinformationen des Kraftfahrzeugs zugreifen. Diese ersten und zweiten Sensoren sind somit bevorzugt von dem Fahrsystem und von der ersten Steuereinheit nutzbar.

Ferner weist das Fahrzeug eine zum Durchführen des erfindungsgemäßen Verfahrens, wie obenstehend beschrieben, ausgebildete erste Steuereinheit auf. Die erste Steuereinheit ist insbesondere dafür eingerichtet, die innerhalb des erfindungsgemäßen Verfahrens dem Fahrzeug zugeordneten Schritte durchzuführen. Die erste Steuereinheit ist dazu eingerichtet, einen Servicebedarf des Fahrzeugs anhand einer Nutzereingabe und/oder anhand von Fahrzeugdaten des Fahrzeugs zu ermitteln; den ermittelten Servicebedarf des Fahrzeugs an einen Server eines Flottenbetreibers und/oder an zumindest eine Servicestation zu übermitteln; Informationen zu zumindest einer ermittelten Servicestation von dem Server und/oder von einer Servicestation zu empfangen; und mittels des Fahrsystems eine autonome Fahrt des Fahrzeugs zu der ermittelten Servicestation durchzuführen, wobei die ermittelte Servicestation zum Durchführen einer zu dem Servicebedarf korrespondierenden Serviceaktion geeignet ist.

Gängige Kraftfahrzeuge weisen bereits heute eine Vielzahl von Sensoren auf, welche als erste Sensoren ständig verschiedene Umweltbedingungen, wie Außentemperatur, (Luft)Feuchtigkeit, etc. erfassen. Ferner können Fahrzeuge auch bereits zweite Sensoren, beispielsweise Lagesensoren einer Diebstahlwarnanlage, aufweisen. Moderne Fahrzeuge sind ferner mit leistungsfähigen Kommunikationsmodulen ausgestattet, die den Empfang von Informationen über eine Vielzahl von Kanälen ermöglichen. Das erfindungsgemäße Verfahren führt diese bereits vorhandenen Sensoren einer neuen vorteilhaften Verwendung zu.

Ein weiterer Aspekt der Erfindung betrifft eine erste Steuereinheit eines Fahrzeugs die dafür eingerichtet ist mit zumindest einem ersten Sensor zum Erfassen von Umgebungsdaten eines Fahrzeugs, mit zumindest einem zweiten Sensor zum Erfassen von Zustandsdaten des Fahrzeugs und mit einem ersten Kommunikationsmodul eines Kraftfahrzeugs sowie mit einem Fahrsystem zum autonomen Fahren des Fahrzeugs zu kommunizieren und die ferner dafür eingerichtet ist, das erfindungsgemäße Verfahren, wie obenstehend beschrieben, durchzuführen. Bevorzugte Ausgestaltungen der ersten Steuereinheit entsprechen den oben mit Bezug zum erfindungsgemäßen Verfahren beschriebenen Durchführungsformen.

Ein weiterer Aspekt der Erfindung betrifft ein Computerprogramm, umfassend Befehle, die bei der Ausführung des Programms durch einen Computer, wie beispielsweise eine erste Steuereinheit eines Fahrzeugs, diesen veranlassen, das erfindungsgemäße Verfahren des Fahrzeugs durchzuführen, das erfindungsgemäße Verfahren des Fahrzeugs aufweisend: Ermitteln eines Servicebedarf des Fahrzeugs anhand einer Nutzereingabe und/oder anhand von Fahrzeugdaten des Fahrzeugs; Übermitteln des ermittelten Servicebedarfs des Fahrzeugs an einen Server eines Flottenbetreibers und/oder an zumindest eine Servicestation; Empfangen von Informationen zu zumindest einer ermittelten Servicestation von dem Server und/oder von einer Servicestation; und Durchführen eine autonome Fahrt des Fahrzeugs zu der ermittelten Servicestation mittels des Fahrsystems, wobei die ermittelte Servicestation zum Durchführen einer zu dem Servicebedarf korrespondierenden Serviceaktion geeignet ist.

Ein weiterer Aspekt der Erfindung betrifft ein computerlesbares Speichermedium, umfassend Befehle, die bei der Ausführung durch einen Computer, wie beispielsweise eine erste Steuereinheit eines Kraftfahrzeugs, diesen veranlassen, das erfindungsgemäße Verfahren auszuführen, wobei das erfindungsgemäße Verfahren die folgenden Schritte aufweist: Ermitteln eines Servicebedarf des Fahrzeugs anhand einer Nutzereingabe und/oder anhand von Fahrzeugdaten des Fahrzeugs; Übermitteln des ermittelten Servicebedarfs des Fahrzeugs an einen Server eines Flottenbetreibers und/oder an zumindest eine Servicestation; Empfangen von Informationen zu zumindest einer ermittelten Servicestation von dem Server und/oder von einer Servicestation; und Durchführen eine autonome Fahrt des Fahrzeugs zu der ermittelten Servicestation mittels des Fahrsystems, wobei die ermittelte Servicestation zum Durchführen einer zu dem Servicebedarf korrespondierenden Serviceaktion geeignet ist.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Systems zur Durchführung des erfindungsgemäßen Verfahrens aus einem autonomen Fahrzeug, einem Server eines Flottenbetreiber und einer Servicestation;
- Figur 2: eine schematische Darstellung eines erstes Servicemoduls zur Innenraumreinigung des Fahrzeugs;
- Figur 3: eine schematische Darstellung eines zweiten Servicemoduls zur Außenreinigung des Fahrzeugs;
- Figur 4A: eine schematische Darstellung eines dritten Servicemoduls zum Befüllen eines Energiespeichers des Fahrzeugs;
- Figur 4B: eine schematische Darstellung eines Ladeanschlusses zum Befüllen eines Energiespeichers des Fahrzeugs;
- Figur 5: eine schematische Darstellung einer erfindungsgemäßen Servicestation gemäß einer ersten Ausführungsform;
- Figur 6: eine schematische Darstellung einer erfindungsgemäßen Servicestation gemäß einer zweiten Ausführungsform; und
- Figur 7: eine schematische Darstellung einer erfindungsgemäßen Servicestation gemäß einer dritten Ausführungsform.

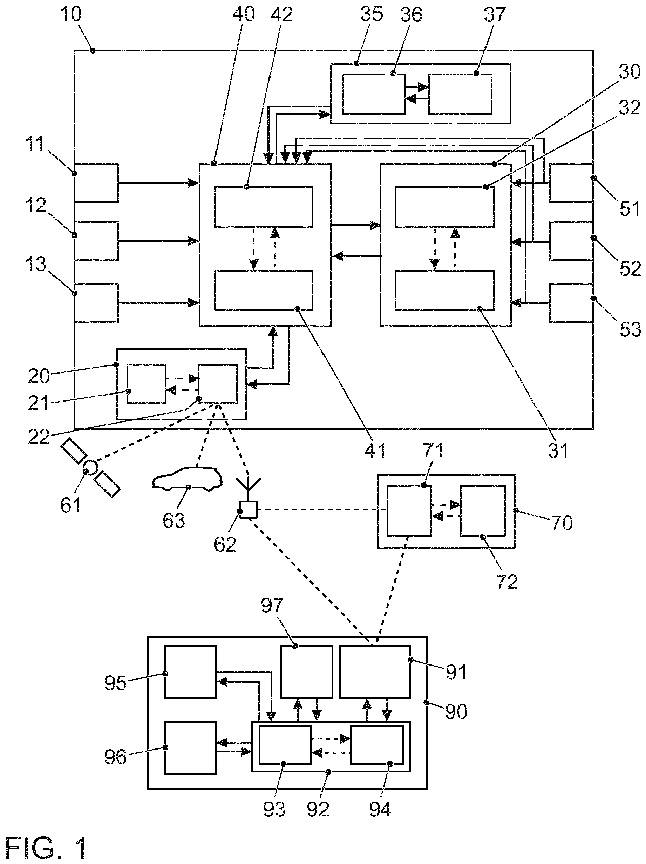

Figur 1 zeigt eine schematische Darstellung eines Systems zur Durchführung des erfindungsgemäßen Verfahrens, das System aufweisend ein autonomes Fahrzeug 10, einen Server 70 eines Flottenbetreibers und eine Servicestation 90.

In Figur 1 ist ein Blockschaltbild eines zweispurigen Fahrzeugs 10 mit Elektromotor 37 dargestellt. Das Fahrzeug 10 umfasst eine Vielzahl erster Sensoren, insbesondere einen ersten Sensor 11, einen zweiten Sensor 12, und einen dritten Sensor 13. Die ersten Sensoren 11, 12, 13 sind eingerichtet zum Erfassen von Umweltinformationen beziehungsweise Umgebungsdaten des Fahrzeugs 10 und umfassen beispielsweise Temperatursensoren zum Erfassen einer Umgebungstemperatur, eine Kamera zum Erfassen eines Bildes einer das Fahrzeugs 10 unmittelbar umgebenden Umwelt, ein Mikrofon zum Erfassen von Geräuschen einer das Fahrzeugs 10 unmittelbar umgebenden Umwelt, Abstandssensoren wie beispielsweise Ultraschallsensoren zum Erfassen von Abständen zu das Fahrzeugs 10 umgebenden Objekten. Die ersten Sensoren 11, 12, 13 übertragen die von ihnen erfassten Umgebungssignale an eine erste Steuereinheit 40 des Fahrzeugs 10.

Das Fahrzeugs 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Fahrzeug 10 selbst betreffenden Zustandsdaten, wie beispielsweise aktuelle Lage- und Bewegungsinformationen des Fahrzeugs 10. Bei den zweiten Sensoren handelt es sich folglich beispielsweise um Geschwindigkeitssensoren, Beschleunigungssensoren, Neigungssensoren, Innenraumbewegungsmelder, Drucksensoren in den Fahrzeugsitzen oder dergleichen. Die zweiten Sensoren 51, 52, 53 übermitteln die von ihnen erfassten Zustandssignale an die erste Steuereinheit 40 des Fahrzeugs 10. Darüber hinaus übermitteln die zweiten Sensoren 51, 52, 53 ihre Messergebnisse unmittelbar an ein Fahrsystem 30 des Fahrzeugs 10.

Das Fahrzeug 10 weist ferner ein erstes Kommunikationsmodul 20 mit einem Speicher 21 und einem oder mehreren Transpondern beziehungsweise Sendeempfängern 22 auf. Bei den Transpondern 22 handelt es sich um einen Funk-, WLAN-, GPS- oder Bluetooth-Sendeempfänger oder dergleichen. Der Transponder kommuniziert mit dem internen Speicher 21 des ersten Kommunikationsmoduls 20, beispielsweise über einen geeigneten Datenbus. Mittels des Transponders 22 kann beispielsweise die aktuelle Position des Fahrzeugs 10 durch Kommunikation mit einem GPS Satelliten 61 ermittelt und diese im internen Speicher 21 gespeichert werden. Ebenso kann mittels des Transponders 22 eine im Speicher 21 abgelegte Berechtigungsinformation an ein externes Kommunikationsmodul übermittelt werden. Das erste Kommunikationsmodul 20 kommuniziert mit der ersten Steuereinheit 40.

Darüber hinaus ist das erste Kommunikationsmodul 20 dafür eingerichtet, mit einem Server 70 eines Flottenbetreibers, insbesondere einem vierten Kommunikationsmodul 71 des Servers 70, zu kommunizieren, beispielsweise über ein UMTS (Universal Mobile Telecommunication Service) oder LTE (Long Term Evolution) Mobilfunknetz. Das erste Kommunikationsmodul 20 ist ferner dazu eingerichtet mit einem zweiten Kommunikationsmodul 92 einer Servicestation 90 zu kommunizieren, beispielsweise ebenfalls über ein UMTS oder LTE Mobilfunknetz. Die Kommunikation über das Mobilfunknetz erfolgt insbesondere über eine Basisstation 62.

Das Fahrzeug 10 weist ferner das Fahrsystem 30 auf, das zum vollständig autonomen Fahrbetrieb, insbesondere zur Längs- und Querführung, des Kraftfahrzeugs 10 eingerichtet ist. Das Fahrsystem 30 weist ein Navigationsmodul 32 auf, das zum Berechnen von Routen zwischen einem Start- und einem Zielpunkt und zum Ermitteln der entlang dieser Route vom Kraftfahrzeug 10 durchzuführenden Manöver eingerichtet ist. Darüber hinaus umfasst das Fahrsystem 30 einen internen Speicher 31, beispielsweise für Kartenmaterialien, der mit dem Navigationsmodul 32 kommuniziert, beispielsweise über einen geeigneten Datenbus.

Zumindest ein Teil der zweiten Sensoren 51, 52, 53, des Kraftfahrzeugs übermittelt seine Messergebnisse direkt an das Fahrsystem 30. Bei diesen unmittelbar an das Fahrsystem übermittelten Daten handelt es sich insbesondere um aktuelle Lage- und Bewegungsinformationen des Kraftfahrzeugs. Diese werden bevorzugt von Geschwindigkeitssensoren, Beschleunigungssensoren, Neigungssensoren, etc. erfasst.

Das Fahrzeug 10 weist ferner ein elektrisches Fahrsystem 35 auf, das die zum elektrischen Antrieb des Fahrzeugs 10 notwendigen Funktionalitäten zur Verfügung stellt. Insbesondere weist das elektrische Fahrsystem 35 einen elektrischen Energiespeicher 36 auf, der einem Elektromotor 37 die zum Antrieb des Fahrzeugs 10 notwendige elektrische Energie zur Verfügung stellt. Das elektrische Fahrsystem 35 weist ferner eine nicht dargestellte Ladevorrichtung zum Aufladen des elektrischen Energiespeichers 36 auf. Bei dem Fahrzeug kann es sich darüber hinaus um ein Hybridfahrzeug handeln, welches einen Wasserstofftank zum Versorgen eines im Fahrzeug 10 angeordneten Brennstoffzellensystems aufweist.

Das Fahrzeug 10 weist ferner eine erste Steuereinheit 40 auf, welche zum Durchführen der erfindungsgemäßen Verfahren eingerichtet ist. Hierzu verfügt die erste Steuereinheit 40 über einen internen Speicher 41 und eine CPU 42, welche miteinander kommunizieren, beispielsweise über einen geeigneten Datenbus. Darüber hinaus steht die erste Steuereinheit 40 in Kommunikationsverbindung mit zumindest den ersten Sensoren 11, 12, 13, den zweiten Sensoren 51, 52, 53, dem ersten Kommunikationsmodul 20 und dem Fahrsystem 30, beispielsweise über eine oder mehrere jeweilige CAN-Verbindungen, eine oder mehrere jeweilige SPI-Verbindungen, oder andere geeignete Datenverbindungen.

Die Steuereinheit 40 ist insbesondere dazu ausgebildet, die folgenden Schritte des erfindungsgemäßen Verfahrens auszuführen: Ermitteln eines Servicebedarf des Fahrzeugs 10 anhand einer Nutzereingabe und/oder anhand von mittels des ersten Kommunikationsmoduls 20 empfangenen Fahrzeugdaten des Fahrzeugs 10; Übermitteln des ermittelten Servicebedarfs des Fahrzeugs 10 an den Server 70 und/oder an zumindest eine Servicestation 90 mittels des ersten Kommunikationsmoduls 20; Empfangen von Informationen zu zumindest einer ermittelten Servicestation 90 von dem Server 70 und/oder von einer Servicestation 90 mittels des ersten Kommunikationsmoduls 20; und Durchführen eine autonome Fahrt des Fahrzeugs 10 zu der ermittelten Servicestation 90 mittels des Fahrsystems 30, wobei die ermittelte Servicestation 90 zum Durchführen einer zu dem Servicebedarf des Fahrzeugs 10 zugehörigen Serviceaktion ausgebildet und geeignet ist.

Das erfindungsgemäße System zum Durchführen des erfindungsgemäßen Verfahrens weist ferner bevorzugt einen Server 70 eines Flottenbetreibers auf. Der Server 70 weist ein (viertes) Kommunikationsmodul 71 auf, das zur Kommunikation mit dem gleichen Protokoll wie das erste Kommunikationsmodul 20 des Fahrzeugs 10 eingerichtet ist. Der Server 70 weist ferner eine (vierte) Steuereinheit 72 auf. Ferner weist der Server 70 bevorzugt einen nicht dargestellten Speicher auf. Die Steuereinheit 72 ist bevorzugt dazu ausgebildet, mittels des Kommunikationsmoduls 71 Informationen zu einem Servicebedarf eines Fahrzeugs 10 zu empfangen, und anhand dieser Informationen eine an dem Fahrzeug 10 durchzuführende Serviceaktion zu ermitteln. Ferner bevorzugt ist die Steuereinheit 72 dazu ausgebildet, mittels des Kommunikationsmoduls 71 Informationen zu einer Auslastung von Servicestationen 90 zu empfangen und anhand dieser Informationen eine zum Durchführen einer Serviceaktion geeignete Servicestation 90 zu ermitteln.

Das erfindungsgemäße System zum Durchführen des erfindungsgemäßen Verfahrens weist ferner zumindest eine erfindungsgemäße Servicestation 90 auf. Die Servicestation 90 weist ein zweites Kommunikationsmodul 91 auf, das zur Kommunikation mit dem ersten Kommunikationsmodul 20 des Fahrzeugs 10 und zur Kommunikation mit dem vierten Kommunikationsmodul 71 des Servers 70 ausgebildet ist. Insbesondere ist das zweite Kommunikationsmodul 91 zur Kommunikation mit dem gleichen Protokoll wie das erste Kommunikationsmodul 20 des Fahrzeugs 10 und wie das (vierte) Kommunikationsmodul 71 des Servers 70 eingerichtet. Darüber hinaus weist die Servicestation 90 eine zweite Steuereinheit 92 auf, welche einen Speicher 93 und eine CPU 94 aufweist, die über einen geeigneten Datenbus, beispielsweise einen CAN-Bus oder SPI-Bus, miteinander kommunizieren.

Die Servicestation 90 weist ferner ein erstes Servicemodul 95, ein zweites Servicemodul 96 und ein drittes Servicemodul 97 auf, die mit der Steuereinheit 92 kommunizieren. Die zweite Steuereinheit 92 ist dazu ausgebildet, in Kommunikation mit dem zweiten Kommunikationsmodul 91 und dem ersten bis dritten Servicemodul 95 bis 97 die von der Servicestation 90 durchgeführten Schritte des erfindungsgemäßen Verfahrens durchzuführen.

Die zweite Steuereinheit 92 ist insbesondere dazu ausgebildet, die folgenden Schritte durchzuführen: Ermitteln zumindest einer am Fahrzeug 10 durchzuführende Serviceaktion anhand von einem Fahrzeug 10 und/oder von einem Server 70 mittels des zweiten Kommunikationsmoduls 91 empfangener Informationen oder Übermittlung von Informationen zur eigenen Lage, Ausstattung und/oder Auslastung an ein Fahrzeug 10 und/oder an einen Server 70 mittels des zweiten Kommunikationsmoduls 91; Initiieren einer autonomen Einfahrt eines Fahrzeugs 10 in die Servicestation 90 mittels des zweiten Kommunikationsmoduls 91; und Kontrolle der autonomen Durchführung zumindest einer Serviceaktion an dem Fahrzeug 10 mittels zumindest eines des ersten bis dritten Servicemoduls 95, 96, 97.

Bevorzugt umfasst das Verfahren der Servicestation 90 ferner die Schritte: Erkennen eines die Servicestation 90 zum Durchführen einer Serviceaktion ansteuernden Fahrzeugs 10 und/oder Erfassen einer fahrzeugspezifischen Größe und/oder eines Servicebedarfs des Fahrzeugs 10 mittels eines nicht dargestellten ersten Kontrollmoduls der Servicestation 90 und/oder eines nicht dargestellten zweiten Kontrollmoduls der Servicestation 90.

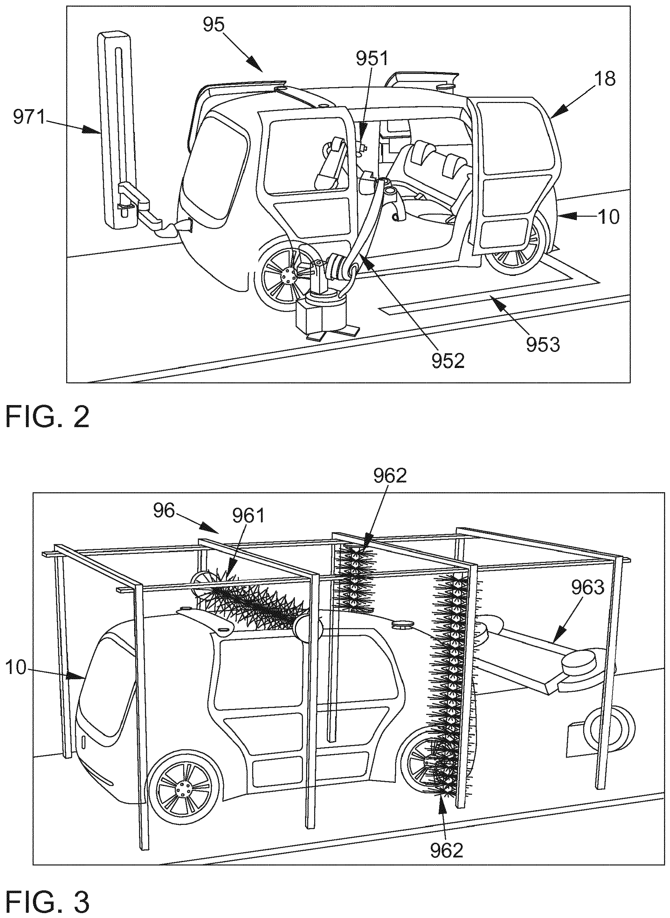

Mit Bezug zu den Figuren 2 bis 7 werden im Folgenden verschiedene Ausführungsformen der erfindungsgemäßen Servicestation 90 sowie der darin enthaltenen Servicemodule erläutert.

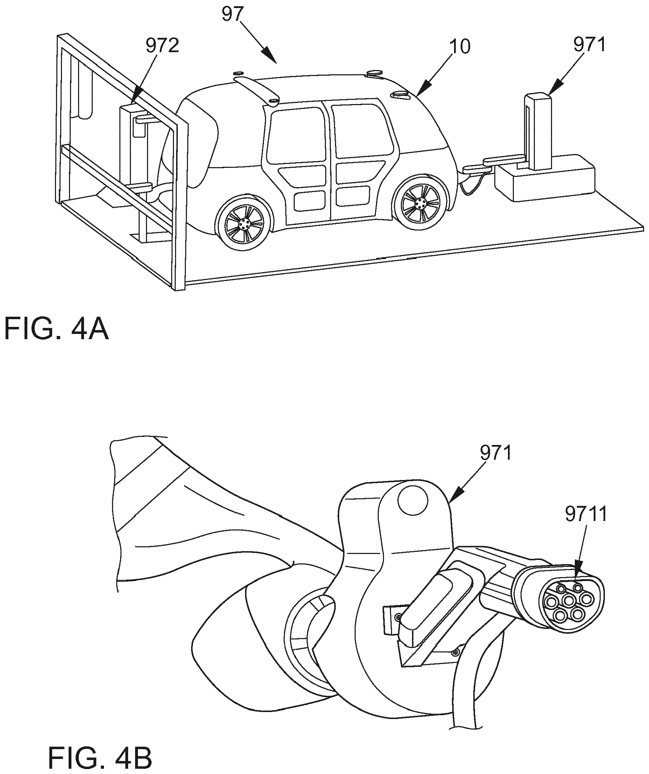

Figur 2 zeigt eine schematische Darstellung eines erstes Servicemoduls 95 zur Innenraumreinigung des Fahrzeugs 10. Um eine Innenraumreinigung des Fahrzeugs 10 durchzuführen, fährt dieses in das Servicemodul 95 ein, um dort auf einer Halteposition 953 zum Stehen zu kommen. Sobald das Fahrzeug 10 auf der Halteposition 953 zum Stehen kommt, öffnen sich die Fahrzeugtüren 18 des Fahrzeugs 10 selbsttätig. Dies ist bevorzugt durch die Steuereinheit 92 der Servicestation 90 oder die Steuereinheit 40 des Fahrzeugs 10 veranlasst. Sobald die Fahrzeugtüren 18 geöffnet sind, werden ein erster Roboterarm 951 und ein zweiter Roboterarm 952 in das Fahrzeug 10 eingeführt. An den Roboterarmen 951, 952 sind Werkzeuge zum Durchführen einer Innenraumreinigung angeordnet, insbesondere eine Staubsaugerdüse, Mittel zum Auftrag eines Reinigungsmittels und Mittel zur Polsterreinigung. Das in Figur 2 gezeigte erste Servicemodul 95 weist ferner einen Ladeanschluss 971 zum Auffüllen eines elektrischen Energiespeichers 36 des Fahrzeugs 10 auf. Der Ladeanschluss 971 wird unten mit Bezug zum dritten Servicemodul 97 und der Figur 4 im Detail erläutert.

Figur 3 zeigt eine schematische Darstellung eines zweiten Servicemoduls 96 zur Außenreinigung des Fahrzeugs 10. Das zweite Servicemodul 96 entspricht weitgehend aus dem Stand der Technik bekannten automatischen Waschstraßen zur autonomen Außenreinigung eines Fahrzeugs 10. Das dritte Servicemodul 96 weist insbesondere nicht dargestellte Mittel zum Auftrag eines Reinigungsfluides auf, wie beispielsweise Düsen zum Auftrag einer Seifenlaufe. Darüber hinaus weist das zweite Servicemodul 96 eine rotierbare obere Waschbürste 961 und rotierbare seitliche Waschbürsten 962 zum Verteilen des Reinigungsfluides und zum Lösen des Schmutzes auf. Ferner weist das zweite Servicemodul 96 einen Trockenfön 963 zum Trocknen des Fahrzeugs 10 auf.

Figur 4A zeigt eine schematische Darstellung eines dritten Servicemoduls 97 zum Befüllen eines Energiespeichers 36 des Fahrzeugs 10. Das in der Figur 4A dargestellte dritte Servicemodul 97 ist zum Befüllen eines Hybridfahrzeugs 10 mit einem Elektromotor und einer Brennstoffzelle ausgebildet. Dazu weist das dritte Servicemodul 97 einen Ladeanschluss 971 zum Laden eines elektrischen Energiespeichers 36 des Fahrzeugs auf. Der Ladeanschluss 971 ist in Figur 4B im Detail dargestellt und weist einen Roboterarm auf, an dessen Spitze ein Befüllelement 9711 in Form eines siebenpoligen Steckers angeordnet ist. Dieses Befüllelement 9711 ist dazu ausgebildet, mit einem Nachfüllelement des Fahrzeugs 10, insbesondere mit einer nicht dargestellten Ladebuchse, verbunden zu werden. Das Befüllelement 9711 ist ferner über eine elektrische Zuleitung mit einem Energienetz verbunden und somit zum Einspeisen elektrischer Energie in das Fahrzeug 10 ausgebildet.

Das dritte Servicemodul 97 weist ferner eine Wasserstoffbetankung 972 zum Auffüllen eines Wasserstoffspeichers 36 des Fahrzeugs 10 auf. Auch die Wasserstoffbetankung 972 weist ein nicht dargestelltes Befüllelement, nämlich eine Zapfpistole, zum Anschluss an ein nicht dargestelltes Nachfüllelement, nämlich einen Tankstutzen, des Fahrzeugs 10 auf. Das Befüllelement der Wasserstoffbetankung 972 ist über eine Zuleitung mit einem Wasserstoffspeicher verbunden und somit zur Wasserstoffbetankung ausgebildet.

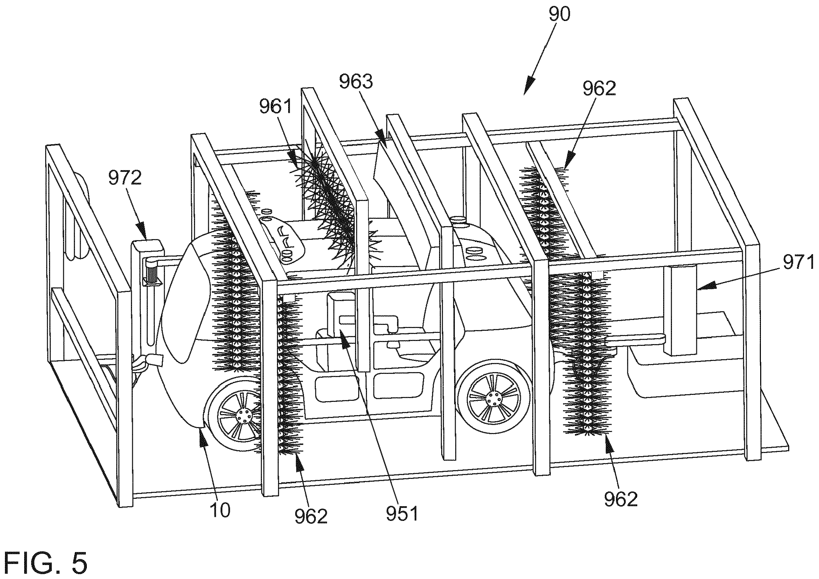

Figur 5 zeigt eine schematische Darstellung einer erfindungsgemäßen Servicestation 90, aufweisend das erste Servicemodul 95 der Figur 2, das zweite Servicemodul 96 der Figur 3 und das vierte Servicemodul 97 der Figur 4A gemäß einer ersten Ausführungsform. In dieser ersten Ausführungsform der Servicestation 90 sind das erste bis dritte Servicemodul 95 bis 97 in einem gemeinsamen Bereich der Servicestation 90 angeordnet. Somit ermöglicht die Servicestation 90 gemäß dieser ersten Ausführungsform das zumindest teilweise simultane Durchführen verschiedener Serviceaktionen an dem Fahrzeug 10.

Ein Ablauf der autonom durchgeführten Serviceaktion in der Servicestation 90 gemäß der ersten Ausführungsform beginnt mit der autonomen Einfahrt des Fahrzeugs 10 in die Servicestation 90. Diese Einfahrt wird bevorzugt durch das Fahrsystem 30 des Fahrzeugs 10 vermittelt, wobei die Steuereinheit 40 des Fahrzeugs 10 vermittels der Kommunikationsmodule 20, 91 mit der Steuereinheit 92 der Servicestation 90 kommuniziert.

Sofern das Fahrzeug in der Servicestation 90 eine Halteposition erreicht hat, öffnen sich die Türen 18 des Fahrzeugs 10 automatisch und ein mobiler Reinigungsroboter fährt autonom in den Innenraum oder wird in den Innenraum des Fahrzeugs 10 eingebracht. Sobald sich die Türen 18 des Fahrzeugs 10 schließen, startet der mobile Reinigungsroboter die Innenraumreinigung und startet eine Außenreinigung des Fahrzeugs 10 mittels des zweiten Servicemoduls 97, insbesondere mittels der Waschbürsten 961, 962 und dem Trockenfön 963.

Sobald die Außenreinigung abgeschlossen ist, wird mittels des Ladeanschluss 971 ein elektrischer Energiespeicher 36 des Fahrzeugs 10 befüllt und wird mittels Wasserstoffbetankung 972 der Wasserstofftank des Fahrzeugs 10 gefüllt. Sobald die Außenreinigung und die Innenreinigung abgeschlossen sind, öffnen sich die Türen 18 und der mobile Reinigungsroboter fährt heraus oder wird herausgehoben. Gegebenenfalls erfolgt über nicht dargestellte Kameras oder andere Sensoren eines zweiten Kontrollmodules eine Überprüfung der Innen- und/oder Außenreinigung des Fahrzeugs 10. Ist diese Überprüfung abschlossen, werden die Befüllelemente von Ladeanschluss 971 und Wasserstoffbetankung 972 abgezogen und das Fahrzeug 10 fährt autonom aus der Servicestation 90.

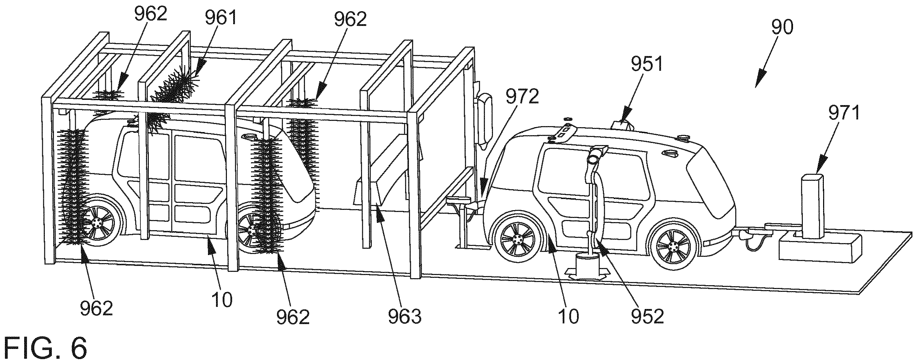

Figur 6 zeigt eine schematische Darstellung einer erfindungsgemäßen Servicestation 90, aufweisend das erste Servicemodul 95 der Figur 2, das zweite Servicemodul 96 der Figur 3 und das vierte Servicemodul 97 der Figur 4A gemäß einer zweiten Ausführungsform. In dieser zweiten Ausführungsform der Servicestation 90 sind das erste und dritte Servicemodul 95, 97 in einem gemeinsamen Bereich der Servicestation 90 angeordnet, wohingegen das zweite Servicemodul 96 den anderen Modulen 95, 97 vorgelagert in der Servicestation 90 angeordnet ist. Somit ermöglicht die Servicestation 90 gemäß der zweiten Ausführungsform das zumindest teilweise simultane Durchführen der Innenraumreinigung und des Befüllens der Energiespeicher 36 des Fahrzeugs 10 nach der Außenreinigung des Fahrzeugs 10.

Ein Ablauf der autonom durchgeführten Serviceaktion in der Servicestation 90 gemäß zweiter Ausführungsform beginnt mit der autonomen Einfahrt des Fahrzeugs 10 in einen ersten Bereich der Servicestation 90. Diese Einfahrt wird bevorzugt durch das Fahrsystem 30 des Fahrzeugs 10 vermittelt, wobei die Steuereinheit 40 des Fahrzeugs 10 vermittels der Kommunikationsmodule 20, 91 mit der Steuereinheit 92 der Servicestation kommuniziert.

Sofern das Fahrzeug 10 in dem ersten Bereich der Servicestation 90 eine Halteposition erreicht hat, beginnt die Außenreinigung des Fahrzeugs 10 mittels dem im ersten Bereich angeordneten zweiten Servicemodul 96, insbesondere mittels der Waschbürsten 961, 962 und dem Trockenfön 963. Sobald die Außenreinigung abgeschlossen ist, erfolgt gegebenenfalls mittels nicht dargestellter Kameras oder Sensoren eine Überprüfung der Außenreinigung des Fahrzeugs 10. Sobald die Außenreinigung und/oder die Überprüfung abgeschlossen ist, fährt das Fahrzeug 10 autonom zu einem dem ersten Bereich nachgelagerten zweiten Bereich der Servicestation 90 oder wird mittels eines Transportbands der Servicestation 90 von dem ersten zu dem zweiten Bereich transportiert.

Sofern das Fahrzeug im zweiten Bereich der Servicestation 90 eine Halteposition erreicht hat, öffnen sich die Türen 18 des Fahrzeugs 10 automatisch und Roboterarme 951, 952 fahren autonom in den Innenraum ein. Mittels an den Roboterarmen 951, 952 befindlicher Werkzeuge beginnt eine Innenraumreinigung des Fahrzeugs 10. Gleichzeitig wird mittels des Ladeanschluss 971 ein elektrischer Energiespeicher 36 des Fahrzeugs 10 befüllt und wird mittels Wasserstoffbetankung 972 der Wasserstofftank des Fahrzeugs 10 gefüllt.

Sobald die Innenreinigung abgeschlossen sind, werden die Roboterarme 951, 952 aus dem Fahrzeug 10 herausgefahren. Gegebenenfalls erfolgt über nicht dargestellte Kameras oder andere Sensoren eines zweiten Kontrollmodules eine Überprüfung der Innenreinigung des Fahrzeugs 10. Ist diese Überprüfung abschlossen, werden die Befüllelemente von Ladeanschluss 971 und Wasserstoffbetankung 972 abgezogen und das Fahrzeug 10 fährt autonom aus der Servicestation 90. In einer alternativen Ausführungsform ist der Trockenfön 963 in dem zweiten Bereich angeordnet und ein Trocknen des Fahrzeugs 10 erfolgt parallel zur Innenraumreinigung und zum Auffüllen der Energiespeicher 36.

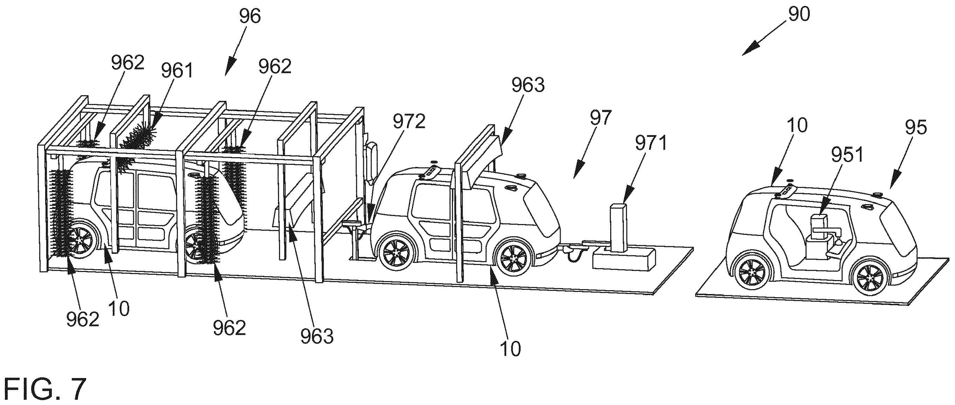

Figur 7 zeigt eine schematische Darstellung einer erfindungsgemäßen Servicestation 90, aufweisend das erste Servicemodul 95 der Figur 2, das zweite Servicemodul 96 der Figur 3 und das vierte Servicemodul 97 der Figur 4A gemäß einer dritten Ausführungsform. In dieser dritten Ausführungsform der Servicestation 90 ist jedes der ersten bis dritten Servicemodule 95, 96, 97 in einem eigenen Bereich der Servicestation 90 angeordnet. Die Servicestation 90 gemäß der dritten Ausführungsform ist somit in besonders einfacher Weise modular aus den einzelnen Servicemodulen 95, 96, 97 zusammengesetzt. Die Durchführung der einzelnen Serviceaktionen erfolgt somit in einfacher Weise zeitlich nacheinander ohne besondere Einschränkungen. Dabei fährt das Fahrzeug 10 nacheinander autonom in die einzelnen Servicemodule 95, 96, 97 ein oder wird mittels Transportbändern zwischen den Servicemodulen 95, 96, 97 transportiert. In den einzelnen Servicemodulen 95, 96, 97 werden die jeweiligen Serviceaktionen durchgeführt. Gegebenenfalls erfolgt eine Qualitätskontrolle der durchgeführten Serviceaktionen.

### Bezugszeichenliste

- 10: Kraftfahrzeug
- 11: erster Sensoren
- 12: zweiter Sensor
- 13: dritter Sensor
- 18: Fahrzeugtür
- 20: erstes Kommunikationsmodul
- 21: Speicher
- 22: Transponder
- 30: Fahrsystem
- 31: Speicher
- 32: CPU
- 35: elektrisches Fahrsystem
- 36: elektrischer Energiespeicher
- 37: Elektromotor
- 40: erste Steuereinheit
- 41: Speicher
- 42: CPU
- 51: vierter Sensoren
- 52: fünfter Sensor
- 53: sechster Sensor
- 61: GPS Satellit
- 62: Mobilfunkstation
- 63: anderes Fahrzeug
- 70: Server
- 71: viertes Kommunikationsmodul
- 72: vierte Steuereinheit
- 90: Servicestation
- 91: zweites Kommunikationsmodul
- 92: zweite Steuereinheit
- 93: Speicher
- 94: CPU
- 95: erstes Servicemodul
- 951: Reinigungsroboter
- 952: Reinigungsroboter
- 953: Halteposition
- 96: zweites Servicemodul
- 961: obere Waschbürste
- 962: seitliche Waschbürste
- 963: Trockenfön
- 97: drittes Servicemodul
- 971: Ladeanschluss
- 972: Wasserstoffbetankung

## Patentansprüche

1. Verfahren zum Betrieb einer autonomen Fahrzeugflotte, die Fahrzeugflotte aufweisend eine Vielzahl autonom fahrender Fahrzeuge (10), jeweils mit zumindest einem zum Erfassen von Umgebungsdaten ausgebildeten ersten Sensor (11, 12, 13), zumindest einem zum Erfassen von Fahrzeugdaten ausgebildeten zweiten Sensor (51, 52, 53), einem zum Durchführen autonomer Fahrmanöver ausgebildeten Fahrsystem (30), einem zum Herstellen zumindest einer Kommunikationsverbindung eingerichteten ersten Kommunikationsmodul (20) und zumindest einem Energiespeicher (36), das Verfahren aufweisend die Schritte:
Ermitteln eines Servicebedarfs zumindest eines Fahrzeugs (10) der Fahrzeugflotte;
Ermitteln einer am Fahrzeug (10) durchzuführenden Serviceaktion anhand des für das Fahrzeug (10) ermittelten Servicebedarfs;
Ermitteln einer zum Durchführen der Serviceaktion geeigneten Servicestation (90);
Autonome Fahrt des Fahrzeugs (10) zu der ermittelten Servicestation (90); und
Autonomes Durchführen der Serviceaktion am Fahrzeug (10) in der Servicestation (90).

2. Verfahren nach Anspruch 1, ferner aufweisend die Verfahrensschritte:
Ermitteln des Servicebedarfs anhand einer Nutzereingabe und/oder anhand von Fahrzeugdaten des Fahrzeugs (10);
Übermitteln des Servicebedarf des Fahrzeugs (10) an einen Server (70) eines Flottenbetreibers und/oder an zumindest eine Servicestation (90);
Ermitteln der Serviceaktion durch den Server (70) und/oder durch die zumindest eine Servicestation (90); und
Übermitteln von Informationen zu der zumindest einem ermittelten Servicestation (90) an das Fahrzeug (10) von dem Server (70) oder von einer Servicestation (90).

3. Verfahren nach Anspruch 1 oder 2, ferner aufweisend die Verfahrensschritte:
Ermitteln der für die Serviceaktion ausgebildeten Servicestation (90) anhand der Auslastung der zumindest einen Servicestation (90) und/oder anhand des Abstands zwischen dem Fahrzeug (10) und der zumindest einen Servicestation (90).

4. Verfahren nach einem der vorangehenden Ansprüche,
wobei der Servicebedarf zumindest eines von einer Verschmutzung des Fahrzeugs (10), einem niedrigen Füllstand des Energiespeichers (36) und einer Fehlermeldung des Fahrzeugs (10) ist, und/oder
wobei die Serviceaktion zumindest ein entsprechendes von einer Reinigung des Fahrzeugs (10), einem Auffüllen des Energiespeichers (36) und einer Wartung oder Reparatur des Fahrzeugs (10) ist.

5. Servicestation (90) für die Fahrzeuge (10) einer autonomen Fahrzeugflotte, aufweisend:
ein für die Kommunikation mit den Fahrzeugen (10) und/oder einem Server (70) eines Flottenbetreibers eingerichtetes zweites Kommunikationsmodul (91);
eine zum Ermitteln einer an einem Fahrzeug (10) durchzuführenden Serviceaktion eingerichtete zweite Steuereinheit (92); und
zumindest ein zum autonomen Durchführen einer Serviceaktion an dem Fahrzeug (10) ausgebildetes Servicemodul (95, 96, 97).

6. Servicestation (90) nach Anspruch 5, wobei die zweite Steuereinheit (92) dafür eingerichtet ist, zumindest eine am Fahrzeug (10) durchzuführende Serviceaktion anhand vom Fahrzeug (10) oder vom Server (70) empfangener Informationen zu ermitteln.

7. Servicestation (90) nach Anspruch 5 oder 6, aufweisend ein zum Durchführen einer Innenraumreinigung des Fahrzeugs (10) ausgebildetes erstes Servicemodul (95), ein zum Durchführen einer Außenreinigung des Fahrzeugs (10) ausgebildetes zweites Servicemodul (96) und/oder ein zum Befüllen des Energiespeichers (36) des Fahrzeugs (10) ausgebildetes drittes Servicemodul (97).

8. Servicestation (90) nach Anspruch 7, wobei das erste, zweite und dritte Servicemodul (95, 96, 97) in einem gemeinsamen Bereich der Servicestation (90) angeordnet sind und die zweite Steuereinheit (92) dafür eingerichtet ist:
die autonome Einfahrt des Fahrzeugs (10) in die Servicestation (10) zu initiieren;
mittels des ersten Servicemoduls (95) eine Innenraumreinigung des Fahrzeugs (10) zu initiieren, wenn zumindest einer Fahrzeugtür (18) des Fahrzeugs (10) geöffnet ist;
mittels des zweiten Servicemoduls (96) eine Außenreinigung des Fahrzeugs (10) durchzuführen, wenn zumindest einer Fahrzeugtür (18) des Fahrzeugs (10) geschlossen ist;
mittels des dritten Servicemoduls (97) den Energiespeicher (36) zu befüllen.

9. Servicestation (90) nach Anspruch 7, wobei das erste, zweite und/oder dritte Servicemodul (95, 96, 97) in verschiedenen Bereichen der Servicestation (90) angeordnet sind und die zweite Steuereinheit (92) dafür eingerichtet ist:
die autonome Einfahrt des Fahrzeugs (10) in einen ersten Bereich der Servicestation (10) zu initiieren;
die autonome Fahrt des Fahrzeugs (10) von dem ersten Bereich, aufweisend zumindest eines von dem ersten, zweiten und dritten Servicemodul (95, 96, 97), zu einem zweiten Bereich, aufweisend zumindest ein anderes von dem ersten, zweiten und dritten Servicemodul (95, 96, 97), zu kontrollieren und/oder zu initiieren.

10. Servicestation (90) nach einem der Ansprüche 5 bis 9, ferner aufweisend:
ein den Servicemodulen (95, 96, 97) vorgelagertes erstes Kontrollmodul mit zumindest einem dritten Sensor, der zum Erfassen zumindest einer den Servicebedarf des Fahrzeugs (10) charakterisierenden Größe ausgebildet ist, und/oder
ein den Servicemodulen (95, 96, 97) nachgelagertes zweites Kontrollmodul mit zumindest einem vierten Sensor, der zum Erfassen einer den Servicebedarfs des Fahrzeugs (10) charakterisierenden Größe ausgebildet ist.
